# EUROPÄISCHE PATENTSCHRIFT

(11) **EP 3 365 196 B1**
(45) Veröffentlichungstag und Bekanntmachung des Hinweises auf die Patenterteilung: **28.08.2019**
(21) Anmeldenummer: 16770869.2
(22) Anmeldetag: 13.09.2016
(51) Int. Cl.: F21S 41/176

(54) **ÜBERWACHUNGSVORRICHTUNG ZUR ÜBERWACHUNG DES BETRIEBSZUSTANDES EINES LASER-FAHRZEUGSCHEINWERFERS**
MONITORING APPARATUS FOR MONITORING THE OPERATING STATE OF A LASER VEHICLE HEADLAMP
DISPOSITIF DE SURVEILLANCE DESTINÉ À SURVEILLER L'ÉTAT DE FONCTIONNEMENT D'UN PHARE LASER DE VÉHICULE

(30) Priorität: 23.10.2015 AT 509072015
(43) Veröffentlichungstag der Anmeldung: 29.08.2018
(73) Patentinhaber: ZKW Group GmbH, 3250 Wieselburg (AT)
(72) Erfinder: HEBENSTREIT, Georg, 3100 St. Pölten (AT)
(74) Vertreter: Patentanwaltskanzlei Matschnig & Forsthuber OG
(86) Internationale Anmeldenummer: PCT/AT2016/060055
(87) Internationale Veröffentlichungsnummer: WO 2017/066815

(56) Entgegenhaltungen:
- EP-A1- 2 120 511
- WO-A1-2008/152922
- WO-A1-2014/072226
- WO-A1-2016/088790
- DE-A1-102014 202 294
- Anonymous: "LED circuit - Wikipedia", , 16. Oktober 2015 (2015-10-16), XP055326461, WikiPedia Gefunden im Internet: URL:https://en.wikipedia.org/w/index.php?t itle=LED_circuit&oldid=686073302 [gefunden am 2016-12-06]

## Beschreibung

Die Erfindung betrifft eine Überwachungsvorrichtung zur Überwachung des Betriebszustandes eines Laser-Fahrzeugscheinwerfers, wobei der Laser-Fahrzeugscheinwerfer zumindest eine Laserlichtquelle und ein von der Laserlichtquelle beleuchtbares und damit zur Ausstrahlung von sichtbarem Licht anregbares Lichtkonversionselement umfasst, wobei die Überwachungsvorrichtung zumindest eine lichtempfindliche Einrichtung und eine Vergleichseinrichtung aufweist.

Des Weiteren betrifft die Erfindung einen Laser-Fahrzeugscheinwerfer, aufweisend zumindest eine Laserlichtquelle und ein zur Ausstrahlung von sichtbarem Licht anregbares Lichtkonversionselement, mit zumindest einer erfindungsgemäßen Überwachungsvorrichtung sowie eine Fahrzeug, insbesondere Kraftfahrzeug, umfassend zumindest einen, vorzugszwei zwei erfindungsgemäße Laser-Fahrzeugscheinwerfer.

Bei dem Betrieb von Laser-Fahrzeugscheinwerfern kann es notwendig sein, dass diese auf ihre Funktionstüchtigkeit hin überprüft werden müssen, um das Auftreten von Gefahrensituationen zu vermeiden. Eine solche Situation könnte beispielsweise gegeben sein, wenn ein Lichtkonversionselement, das zur Konversion von Laserlicht in sichtbares Licht eingerichtet ist, beschädigt wird, die Lichtkonversion infolge dessen unvollständig abläuft und Laserlicht unkonvertiert den Scheinwerfer verlässt. Zur Erkennung eines solchen fehlerhaften Zustandes sind aus dem Stand der Technik Überwachungsvorrichtungen mit lichtempfindlichen Einrichtungen bekannt geworden, die Photodioden oder Phototransistoren aufweisen, mit Hilfe derer das Spektrum des durch den Laser-Scheinwerfer abgestrahlten Lichtes zumindest teilweise erfasst und durch Vergleich mit vorgegebenen Sollwerten auf das Vorliegen eines fehlerhaften Betriebszustandes rückgeschlossen werden kann. Um eine ausreichend sensible Detektion des Laserlichtes durch die Photodioden und/oder Phototransistoren zu gewährleisten, werden im Stand der Technik typischerweise optische Filter eingesetzt, die den Photodioden und/oder Phototransistoren vorgelagert werden und die im Wesentlichen lediglich im Wellenlängenbereich des Laserlichtes bzw. der Laserlichtquelle lichtdurchlässig sind. Dadurch kann die Empfindlichkeit der Photodioden und/oder Phototranistoren zur Erkennung des Laserlichtes ausreichend erhöht werden, sodass eine Erkennung von zuvor genannten Fehlerzuständen möglich ist.

Der Einsatz von Photodioden und/oder Phototranistoren unter Zuhilfenahme von vorgelagerten optischen Filtern stellt einen beträchtlichen Kosten und Komponentenaufwand dar, indem zusätzliche Prozessschritte und/oder Gehäuse und/oder weitere Bauteile erforderlich sind. Außerdem können Fehler bei der Abstimmung des Filters und der Photodioden und/oder Phototranistoren unterlaufen.

Hierzu zeigt die DE 10 2014 202294 A1 eine Beleuchtungseinrichtung mit mindestens einer Laserlichtquelle, mindestens einem Konversionselement und mindestens zwei Lichtsensoren zur Überwachung der Lichtemission, wobei die Lichtsensoren beide zum Detektieren von am mindestens einen Konversionselement gestreutem, nicht-konvertierten Laserlicht vorgesehen sind, oder die beide zum Detektieren von konvertiertem Laserlicht vorgesehen sind, oder die Beleuchtungseinrichtung mindestens ein optisches Element aufweist, das am Konversionselement gestreutes, nicht-konvertiertes Laserlicht oder konvertiertes Laserlicht zu den Lichtsensoren gelenkt wird.

Eine Aufgabe der Erfindung besteht daher darin, die obig genannten Nachteile zu beheben und eine Überwachungsvorrichtung zu schaffen, die kostengünstig realisierbar ist und gleichzeitig eine zuverlässige Funktionsweise sicherstellt. Diese Aufgabe wird mit einer Überwachungsvorrichtung der eingangs genannten Art gelöst, bei welcher erfindungsgemäß die lichtempfindliche Einrichtung zumindest eine LED (Leuchtdiode) umfasst, die dazu eingerichtet ist, von der Laserlichtquelle empfangenes Licht in ein elektrisches Signal zu wandeln, das der Vergleichseinrichtung zugeführt ist, wobei die Vergleichseinrichtung dazu eingerichtet ist, das elektrische Signal mit einem vorgebbaren Wert zu vergleichen und ergebnisabhängig von dem Vergleich ein Fehlersignal auszugeben. Bei dem vorgegebenen Wert kann es sich um einen definierbaren Schwellwert handeln. Abhängig von der Art des elektrischen Signals kann dieser Schwellwert sinnvoll festgelegt werden. Beispielsweise kann das Signal der LED im korrekten Betriebszustand des Laserfahrzeugscheinwerfers zwischen 0 und 0,3V betragen und im Fehlerfall auf über 0,5V ansteigen. Der Schwellwert könnte in einem solchen Fall bei 0,5 V liegen. Der Einsatz einer LED zur Erkennung des von der Laserlichtquelle abgestrahlten Lichtes, im folgenden auch Laserlicht genannt, hat den besonderen Vorteil, dass LEDs im Gegensatz zu Photodioden oder Phototransistoren ein wesentlich schmalbandigeres Frequenzspektrum aufweisen und damit bereits eine ausreichend hohe Empfindlichkeit zur Erkennung des jeweiligen Laserlichtes aufweisen. Der Einsatz von zusätzlichen optischen Filtern kann dadurch entfallen. Die erfindungsgemäße Überwachungsvorrichtung ist dadurch robust und kostengünstig.

Das von der Laserlichtquelle abgestrahlte Licht ist vorzugsweise blaues Licht in einem Wellenlängenbereich zwischen 420 und 520 nm. Grundsätzlich kann das Laserlicht aber beliebiger Wellenlänge sein, die dazu geeignet ist, ein Lichtkonversionselement zur Abstrahlung von sichtbarem Licht anzuregen. Beispielsweise könnte das Laserlicht in einem Wellenlängenbereich zwischen 230 nm (Nanometer) und 760 nm oder ebenso außerhalb des sichtbaren Bereichs oberhalb oder unterhalb des angegebenen Wellenlängenbereiches liegen. Das Lichtkonversionselement kann typischerweise ein sogenannter Phosphor-Konverter (z.B. eine Phosphorverbindung oder ein YAG-Kristall mit Cer-Dotierung, etc.) sein.

Insbesondere kann vorgesehen sein, dass die Vergleichseinrichtung einen Komparator umfasst, der dazu eingerichtet ist, das elektrische Signal mit einem Schwellwert zu vergleichen und bei Überschreiten eines Schwellwertes das Fehlersignal auszugeben.

Zudem kann vorgesehen sein, dass das Fehlersignal ein elektrisches Gleichsignal mit einem Spannungspegel ungleich 0 V gegen Masse ist. Ein Ausfall der Spannungsversorgung der Überwachungsvorrichtung würde daher nicht zwangsläufig in der Ausgabe eines Fehlersignales resultieren. Unter dem Begriff "Masse" wird ein Nullpotential bzw. Bezugspotential verstanden, auf das Signal- und Betriebsspannungen bezogen werden. Bei einem Fahrzeug entspricht das Massepotential typischerweise dem Minuspol der Fahrzeugbatterie, der üblicherweise mit der Fahrzeugkarosserie elektrisch verbunden ist.

Alternativ dazu kann vorgesehen sein, dass das Fehlersignal ein elektrisches Gleichsignal mit einem Spannungspegel gleich 0 V gegen Masse ist. Dadurch kann sichergestellt werden, dass trotz Ausfalls der Energieversorgung der Überwachungsvorrichtung ein Fehlersignal ausgegeben werden kann.

Insbesondere kann vorgesehen sein, dass die lichtempfindliche Einrichtung zumindest eine blaue LED aufweist. Unter einer blauen LED wird eine Leuchtdiode verstanden, die zur Abstrahlung von blauem Licht (z.B. im Wellenbereich zwischen 450 und 500 nm) eingerichtet ist. Blaue LEDs sind zur Messung von blauem Licht geeignet, und erweisen sich daher bei dem Einsatz von Laserlichtquellen, die blaues Licht abstrahlen, als besonders vorteilhaft.

Insbesondere kann vorgesehen sein, dass die lichtempfindliche Einrichtung zumindest zwei LEDs aufweist, wobei eine der LEDs zur Messung des Laserlichtes eingerichtet ist und eine andere der LEDs zur Messung des verbleibenden, von dem Lichtkonversionselement konvertierten Lichtes eingerichtet ist. Der Einsatz von zwei unterschiedlichen Leuchtdioden ermöglicht eine besonders genaue Messung des von dem Laser-Fahrzeugscheinwerfer abgestrahlten Lichtes. Vorzugsweise werden der Vergleichseinrichtung die Signale aller LEDs zugeführt und mit einem oder mehreren Schwellwert verglichen, wobei ergebnisabhängig von dem Vergleich auf das Vorliegen eines Fehlers rückgeschlossen werden kann.

Unter dem Ausdruck "verbleibendes, konvertiertes Licht" wird jenes Lichtspektrum verstanden, dass von Lichtkonversionselement abgestrahlt wird, vermindert um Wellenspektrum des Laserlichtes.

Besonders günstig kann es sein, wenn die spektrale Empfindlichkeit der LED zur Messung des Laserlichtes im Wellenlängenbereich des Laserlichtes maximal ist und die LED zur Messung des verbleibenden, von dem Lichtkonversionselement konvertierten Lichtes eine spektrale Empfindlichkeit aufweist, deren Maximum im Wellenlängenbereich des sichtbaren Lichtes vermindert um den Wellenlängenbereich des Laserlichtes liegt.

Dabei kann insbesondere vorgesehen sein, dass die LED zur Messung des Laserlichtes eine blaue LED ist und die LED zur Messung des verbleibenden, von dem Lichtkonversionselement konvertierten Lichtes eine rote LED ist. Unter einer roten LED wird eine Leuchtdiode verstanden, die zur Abstrahlung von rotem Licht (z.B. im Wellenbereich zwischen 610 und 760 nm) eingerichtet ist. Die Kombination von blauen und roten LEDs hat sich insbesondere zur Überwachung von Laser-Fahrzeugscheinwerfer, die blaue Laserlichtdioden aufweisen, als besonders vorteilhaft erwiesen, da durch die ausreichende Beabstandung der spektralen Empfindlichkeit der blauen und roten Diode im Frequenzband eine klare Unterscheidung zwischen dem Laserlicht und dem konvertierten Licht durch Heranziehen der von den Dioden ausgegebenen Signale möglich ist.

Erfindungsgemäß sind die zumindest zwei LEDs antiparallel zueinander geschaltet. Dadurch kann in einfacher Weise ein ausreichender Schutz vor elektrostatischen Entladungen (ESD) gegeben werden. Außerdem ist es dadurch möglich, dass abhängig von dem Ausgabesignal der Leuchtdiode die Leuchtdioden einander sperren. Beispielsweise kann es günstig sein, wenn die blaue Diode eine Ausgabesignal mit höherer Spannung aufweist, sodass bei Aktivwerden beider Dioden, beispielsweise in einem fehlerhaften Zustand, bei welchem die Lichtkonversion nur teilweise erfolgt, die blaue Diode die rote Diode sperrt und so ein klar erkennbares Ausgabesignal an die Vergleichseinrichtung abgegeben wird.

Insbesondere kann vorgesehen sein, dass infolge der Messungen ausgegebene Ausgabesignale der LEDs der Vergleichseinrichtung zugeführt und durch diese miteinander verglichen werden und das Fehlersignal unter Berücksichtigung der Ausgabesignale bestimmt wird. Beispielsweise kann ein Quotient aus der Höhe des Ausgabesignals der blauen Diode und des Ausgabesignals der roten Diode als Parameter herangezogen werden, der zum Vergleich mit einem Schwellwert herangezogen werden kann. Auf diese Weise kann eine fälschliche Fehlerkennung, die beispielsweise durch einen hohes Ausgabesignal der blauen LED und roten LED verursacht durch eine hohe Gesamtlichtabtstrahlung (z.B. aufgrund von aktiviertem Fernlicht oder aufgrund eines Betätigens einer Lichthupenfunktion) auftreten könnte, effizient verhindert werden.

Ein weiterer Aspekt der Erfindung betrifft einen Laser-Fahrzeugscheinwerfer, aufweisend zumindest eine Laserlichtquelle und ein zur Abstrahlung von sichtbarem Licht anregbares Lichtkonversionselement, mit zumindest einer erfindungsgemäßen Überwachungsvorrichtung, wobei vorzugsweise die zumindest eine LED der lichtempfindlichen Einrichtung eine auf das Spektrum der Laserlichtquelle angepasste LED ist.

Unter einer auf das Spektrum der Laserlichtquelle angepasste Leuchtdiode wird eine Leuchtdiode verstanden, die dazu geeignet ist, das von der Laserlichtquelle abgestrahlte Licht mit einer im Vergleich zu anderen Wellenlängenbereichen erhöhten spektralen Empfindlichkeit zu erfassen. Für eine blaue Laserlichtquelle ist typischerweise eine blaue LED, für eine rote Laserlichtquelle hingegen eine rote LED usw. vorgesehen.

Um eine automatische Abschaltung bei Vorliegen eines fehlerhaften Zustandes zu gewährleisten, kann vorgesehen sein, dass der Laser-Fahrzeugscheinwerfer eine mit der Vergleichseinrichtung verbundene Steuereinheit zum Ansteuern der Laserlichtquelle aufweist, wobei die Steuereinheit dazu eingerichtet ist, die Laserlichtquelle bei Vorliegen des Fehlersignales zu deaktivieren. Bei einer deaktivierten Laserlichtquelle ist die Lichtabstrahlung durch die Laserlichtquelle verhindert.

In einem weiteren Aspekt betrifft die Erfindung ein Fahrzeug, insbesondere ein Kraftfahrzeug, umfassend zumindest einen, vorzugszwei zwei erfindungsgemäße Laser-Fahrzeugscheinwerfer. Zwar kann der Laser-Fahrzeugscheinwerfer, wie zuvor angegeben, über eine Steuereinheit zur Deaktivierung der Laserlichtquelle verfügen. Alternativ dazu kann diese Steuereinheit ebenso bei dem Fahrzeug vorgesehen sein, und mit dem Laser Fahrzeugscheinwerfer bzw. der Laserlichtquelle verbunden werden.

Die Erfindung ist im Folgenden anhand einer beispielhaften und nicht einschränkenden Ausführungsform näher erläutert, die in den Figuren veranschaulicht ist. Darin zeigen
Figur 1 eine schematische Darstellung eines Ausschnitts eines erfindungsgemäßen Laserfahrzeugscheinwerfers,
Figur 2 eine schematische Darstellung einer lichtempfindlichen Einrichtung,
Figur 3 einen beispielhaften elektrischen Schaltplan einer erfindungsgemäßen Überwachungsvorrichtung, und
Figur 4 einen zeitlichen Verlauf von elektrischen Signalen der Überwachungsvorrichtung.

In den folgenden Figuren bezeichnen - sofern nicht anders angegeben - gleiche Bezugszeichen gleiche Merkmale.

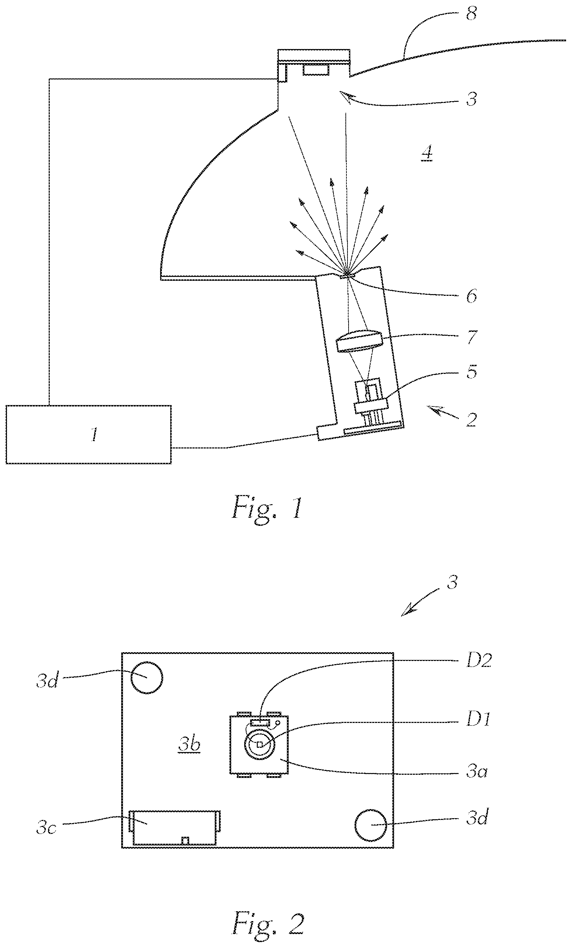

Figur 1 zeigt eine schematische Darstellung eines Ausschnitts eines erfindungsgemäßen Laserfahrzeugscheinwerfers 4. Der Laserfahrzeugscheinwerfer 4 umfasst im vorliegenden Ausführungsbeispiel eine Laserlichtquelle 5, ein von der Laserlichtquelle 5 beleuchtbares und damit zur Ausstrahlung von sichtbarem Licht anregbares Lichtkonversionselement 6, wobei zwischen dem Lichtkonversionselement 6 und der Laserlichtquelle 5 eine Linse 7 angeordnet ist, eine lichtempfindliche Einrichtung 3, einen Reflektor 8 und eine Vergleichseinrichtung 1, die dazu eingerichtet ist, das elektrische Signal mit einem vorgebbaren Wert zu vergleichen und ergebnisabhängig von dem Vergleich ein Fehlersignal auszugeben.

Die Laserlichtquelle 5, die Linse 7 sowie das Lichtkonversionselement 6 sind im vorliegenden Fall zu einer Leuchtvorrichtung 2 zusammengefasst, die beispielsweise als in einem eigenständigen Gehäuse verbaute Komponente ausgebildet sein kann.

Der Laserfahrzeugscheinwerfer 4 umfasst eine erfindungsgemäße Überwachungsvorrichtung, die wiederum die bereits genannte lichtempfindliche Einrichtung 3 und die Vergleichseinrichtung 1 aufweist. Die lichtempfindliche Einrichtung 3 ist mit dem Reflektor 8 fest verbunden bzw. in einer Öffnung des Reflektors 8 aufgenommen, die vorzugsweise in einer Position angeordnet ist, in die die Laserlichtquelle 5 bei Fehlen des Konversionselements 6 vorwiegend leuchten würde. Insbesondere kann vorgesehen sein, dass die der Leuchtvorrichtung 2 zugewandte Seite der lichtempfindlichen Einrichtung 3 eine lichtabsorbierende Oberfläche aufweist, um im Fehlerfall eine unerwünschte Reflexion von Laserlicht und damit einen Austritt aus dem Fahrzeugscheinwerfer zu verhindern.

Figur 2 zeigt eine schematische Darstellung der lichtempfindlichen Einrichtung 3. Die Einrichtung 3 umfasst zwei LEDs, nämlich eine blaue LED D1 und eine rote LED D2, die im vorliegenden Ausführungsbeispiel in einem gemeinsamen Gehäuse 3a angeordnet sind, alternativ dazu aber ebenso in getrennten Gehäusen angeordnet sein können. Das Gehäuse 3a bzw. die LEDs D1 und D2 sind wiederum mit einer Printplatte 3b elektrisch verbunden, die im vorliegenden Ausführungsbeispiel eine Steckverbindung 3c zur elektrischen Verbindung mit der Vergleichseinrichtung 1 sowie Bohrlöcher 3d zur mechanischen Verbindung mit dem Reflektor 8 aufweist. Die Vergleichseinrichtung 1 bzw. ihre elektrische Implementierung könnte auch direkt auf der Printplatte 3b angeordnet werden, wodurch externe Verbindungskomponenten wie beispielsweise Verbindungskabel von der lichtempfindlichen Einrichtung 3 zur Vergleichseinrichtung 1, entfallen können. Die Steckverbindung 3c könnte dann zur direkten Verbindung mit einer Steuereinheit im Fahrzeug eingerichtet sein.

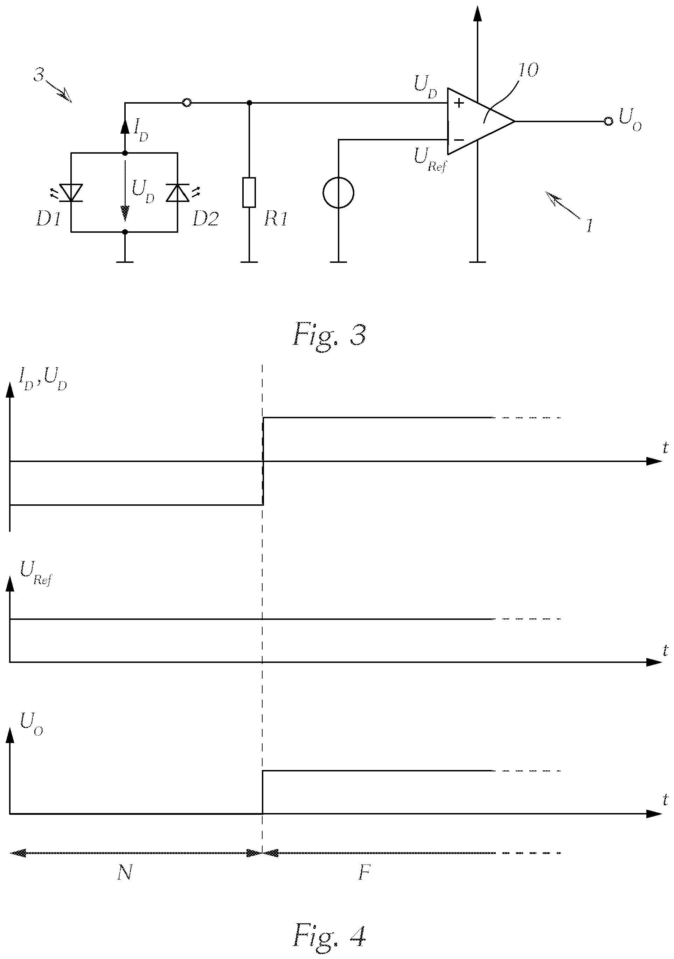

Figur 3 zeigt einen beispielhaften elektrischen Schaltplan einer erfindungsgemäßen Überwachungsvorrichtung. Darin umfasst die Vergleichseinrichtung 1 einen Komparator 10, der dazu eingerichtet ist, das elektrische Signal U_{D}, das von der Antiparallelschaltung der Dioden D1 und D2 abgegeben wird, mit einem Schwellwert U_{ref} zu vergleichen und bei Überschreiten des Schwellwertes U_{ref} ein Fehlersignal abzugeben, dass im vorliegenden Beispiel mit dem Spannungspegel Uₒ im Zustand "high" (siehe Figur 4) gleichzusetzen ist.

Alternativ dazu könnte das Fehlersignal ebenso dem Zustand "low" gegenüber Masse entsprechen, beispielsweise 0 V gegen Masse.

Figur 4 zeigt einen zeitlichen Verlauf von elektrischen Signalen der Überwachungsvorrichtung, genauer gesagt der Signale I_{D}, U_{D}, U_{ref} und Uₒ. Dabei wird für eine Anfangszeitdauer "N" der Signalverlauf der genannten Signale im fehlerfreien Zustand dargestellt. Im nachfolgenden Zeitraum "F" wurde eine Fehlfunktion des Laser-Fahrzeugscheinwerfers durch die Überwachungsvorrichtung erkannt, beispielsweise aufgrund einer Überschreitung des Schwellwertes U_{ref}, wodurch der Diodenstrom I_{D} und die Ausgangsspannung U_{D} ansteigt und das Ausgabesignal Uₒ in den logischen Zustand "high" (z.B. 5 V) geschaltet wird. Damit ist eine robuste und kostengünstige Erkennung von Fehlerzuständen gegeben.

In Anbetracht dieser Lehre ist der Fachmann in der Lage, ohne erfinderisches Zutun zu anderen, nicht gezeigten Ausführungsformen der Erfindung zu gelangen. Die Erfindung ist daher nicht auf die gezeigte Ausführungsform beschränkt. Auch können einzelne Aspekte der Erfindung bzw. der Ausführungsform aufgegriffen und miteinander kombiniert werden. Wesentlich sind die der Erfindung zugrunde liegenden Gedanken, die durch einen Fachmann in Kenntnis dieser Beschreibung in mannigfaltiger Weise ausgeführt werden können und trotzdem als solche aufrechterhalten bleiben.

## Patentansprüche

1. Überwachungsvorrichtung zur Überwachung des Betriebszustandes eines Laser-Fahrzeugscheinwerfers (4), wobei der Laser-Fahrzeugscheinwerfer (4) zumindest eine Laserlichtquelle (5) und ein von der Laserlichtquelle (5) beleuchtbares und damit zur Ausstrahlung von sichtbarem Licht anregbares Lichtkonversionselement (6) umfasst, wobei die Überwachungsvorrichtung zumindest eine lichtempfindliche Einrichtung (3) und eine Vergleichseinrichtung (1) aufweist, **dadurch gekennzeichnet, dass** die lichtempfindliche Einrichtung (3) zumindest eine LED (D1) umfasst, die dazu eingerichtet ist, von der Laserlichtquelle (5) empfangenes Licht in ein elektrisches Signal (U_{D}) zu wandeln, das der Vergleichseinrichtung (1) zugeführt ist, wobei die Vergleichseinrichtung (1) dazu eingerichtet ist, das elektrische Signal (U_{D}) mit einem vorgebbaren Wert zu vergleichen und ergebnisabhängig von dem Vergleich ein Fehlersignal (Uₒ) auszugeben, wobei die lichtempfindliche Einrichtung (3) zumindest zwei LEDs aufweist, wobei eine der LEDs zur Messung des Laserlichtes eingerichtet ist und eine andere der LEDs zur Messung des verbleibenden, von dem Lichtkonversionselement (6) konvertierten Lichtes eingerichtet ist, wobei die zumindest zwei LEDs antiparallel zueinander geschaltet sind.

2. Überwachungsvorrichtung nach Anspruch 1, **dadurch gekennzeichnet, dass** die Vergleichseinrichtung (1) einen Komparator (10) umfasst, der dazu eingerichtet ist, das elektrische Signal (U_{D}) mit einem Schwellwert (U_{ref}) zu vergleichen und bei Überschreiten des Schwellwertes (U_{ref}) das Fehlersignal (Uₒ) auszugeben.

3. Überwachungsvorrichtung nach einem der vorhergehenden Ansprüche, **dadurch gekennzeichnet, dass** das Fehlersignal (Uₒ) ein elektrisches Gleichsignal mit einem Spannungspegel ungleich 0 V gegen Masse ist.

4. Überwachungsvorrichtung nach Anspruch 1 oder 2, **dadurch gekennzeichnet, dass** das Fehlersignal (Uₒ) ein elektrisches Gleichsignal mit einem Spannungspegel gleich 0 V gegen Masse ist.

5. Überwachungsvorrichtung nach einem der vorhergehenden Ansprüche, **dadurch gekennzeichnet, dass** die lichtempfindliche Einrichtung (3) zumindest eine blaue LED aufweist.

6. Überwachungsvorrichtung nach einem der vorhergehenden Ansprüche, **dadurch gekennzeichnet, dass** die spektrale Empfindlichkeit der LED zur Messung des Laserlichtes im Wellenbereich des Laserlichtes maximal ist und die LED zur Messung des verbleibenden, von dem Lichtkonversionselement (6) konvertierten Lichtes eine spektrale Empfindlichkeit aufweist, dessen Maximum im Wellenlängenbereich des sichtbaren Lichtes vermindert um den Wellenlängenbereich des Laserlichtes liegt.

7. Überwachungsvorrichtung nach Anspruch 6, **dadurch gekennzeichnet, dass** das die LED zur Messung des Laserlichtes eine blaue LED ist und die LED zur Messung des verbleibenden, von dem Lichtkonversionselement (6) konvertierten Lichtes eine rote LED ist.

8. Überwachungsvorrichtung nach einem der vorhergehenden Ansprüche, **dadurch gekennzeichnet, dass** infolge der Messungen ausgegebene Ausgabesignale der LEDs der Vergleichseinrichtung (1) zugeführt und durch diese miteinander verglichen werden und das Fehlersignal (Uₒ) unter Berücksichtigung der Ausgabesignale bestimmt wird.

9. Laser-Fahrzeugscheinwerfer, aufweisend zumindest eine Laserlichtquelle (5) und ein zur Ausstrahlung von sichtbarem Licht anregbares Lichtkonversionselement (6), mit zumindest einer Überwachungsvorrichtung nach einem der vorhergehenden Ansprüche.

10. Laser-Fahrzeugscheinwerfer (4) nach Anspruch 9, **dadurch gekennzeichnet, dass** die zumindest eine LED der lichtempfindlichen Einrichtung (3) eine auf das Spektrum der Laserlichtquelle (5) angepasste LED ist.

11. Laser-Fahrzeugscheinwerfer (4) nach Anspruch 9 oder 10, **dadurch gekennzeichnet, dass** der Laser-Fahrzeugscheinwerfer (4) eine mit der Vergleichseinrichtung (1) verbundene Steuereinheit zum Ansteuern der Laserlichtquelle (5) aufweist, wobei die Steuereinheit dazu eingerichtet ist, die Laserlichtquelle (5) bei Vorliegen des Fehlersignales (Uₒ) zu deaktivieren.

12. Fahrzeug, insbesondere Kraftfahrzeug, umfassend zumindest einen, vorzugszwei zwei Laser-Fahrzeugscheinwerfer (4) nach Anspruch 10 oder 11.

13. Fahrzeug nach Anspruch 12, **dadurch gekennzeichnet, dass** das Fahrzeug eine mit der Vergleichseinrichtung (1) verbundene Steuereinheit zum Ansteuern der Laserlichtquelle (5) aufweist, wobei die Steuereinheit dazu eingerichtet ist, die Laserlichtquelle (5) bei Vorliegen des Fehlersignales (Uₒ) zu deaktivieren.

## Claims

1. A monitoring apparatus for monitoring the operating state of a laser vehicle headlamp (4), wherein the laser vehicle headlamp (4) comprises at least one laser light source (5) and one light conversion element (6) which can be illuminated by the laser light source (5) and which can thereby be excited to emit visible light, wherein the monitoring apparatus has at least one light-sensing device (3) and one comparing device (1), **characterized in that** the light-sensing device (3) comprises at least one LED (D1) designed to convert the light received from the laser light source (5) into an electric signal (U_{D}) which is supplied to the comparing device (1), wherein the comparing device (1) is designed to compare the electric signal (U_{D}) with a defined value and to emit an error signal (U_{O}) depending on the result of the comparison, wherein the light-sensing device (3) comprises at least two LEDs, wherein one of the LEDs is designed to measure the laser light and another one of the LEDs is designed to measure the remaining light that was converted by the light conversion element (6), wherein the at least two LEDs are connected antiparallel to each other.

2. The monitoring apparatus according to Claim 1, **characterized in that** the comparing device (1) comprises a comparator (10) which is designed to compare the electric signal (U_{D}) with a threshold value (U_{ref}) and to emit the error signal (U_{O}) if the threshold value (U_{ref}) is exceeded.

3. The monitoring apparatus according to any one of the preceding claims, **characterized in that** the error signal (U_{O}) is an electric direct current signal with a voltage unequal to 0 V with respect to ground.

4. The monitoring apparatus according to Claim 1 or 2, **characterized in that** the error signal (U_{O}) is an electric direct current signal with a voltage equal to 0 V with respect to ground.

5. The monitoring apparatus according to any one of the preceding claims, **characterized in that** the light-sensing device (3) has at least one blue LED.

6. The monitoring apparatus according to any one of the preceding claims, **characterized in that** the spectral sensitivity of the LED for measuring the laser light is at its maximum in the waveband of the laser light and that the LED for measuring the remaining light converted by the light conversion element (6) has a spectral sensitivity, the maximum of which lies in the wavelength range of the visible light reduced by the wavelength range of the laser light.

7. The monitoring apparatus according to Claim 6, **characterized in that** the LED for measuring the laser light is a blue LED and the LED for measuring the remaining light converted by the light conversion element (6) is a red LED.

8. The monitoring apparatus according to any one of the preceding claims, **characterized in that** the output signals of the LEDs corresponding to the measurements are supplied to the comparing device (1) and compared with each other by the same, and that the error signal (U_{O}) is defined under consideration of the output signals.

9. A laser vehicle headlamp having at least one laser light source (5) and one light conversion element (6) which can be excited to emit visible light, with at least one monitoring apparatus according to any one of the preceding claims.

10. The laser vehicle headlamp (4) according to Claim 9, **characterized in that** the at least one LED of the light-sensing device (3) is an LED adapted to the spectrum of the laser light source (5).

11. The laser vehicle headlamp (4) according to Claim 9 or 10, **characterized in that** the laser vehicle headlamp (4) has a control unit connected with the comparing device (1) for controlling the laser light source (5), wherein the control unit is designed to deactivate the laser light source (5) when the error signal (U_{O}) is present.

12. A vehicle, in particular a motor vehicle, comprising at least one, preferably two, laser vehicle headlamp(s) (4) according to Claim 10 or 11.

13. The vehicle according to Claim 12, **characterized in that** the vehicle has a control unit connected with the comparing device (1) for controlling the laser light source (5), wherein the control unit is designed to deactivate the laser light source (5) when the error signal (U_{O}) is present.

## Revendications

1. Dispositif de surveillance destiné à surveiller l'état de fonctionnement d'un phare laser de véhicule (4), dans lequel le phare laser de véhicule (4) comprend au moins une source de lumière laser (6) et un élément de conversion de lumière pouvant être illuminé par la source de lumière laser (5) et pouvant donc être excité afin d'irradier de la lumière visible, dans lequel le dispositif de surveillance présente au moins un dispositif sensible à la lumière (3) et un dispositif de comparaison (1), **caractérisé en ce que** le dispositif sensible à la lumière (3) comprend au moins une DEL (D1), qui est conçue afin de convertir la lumière reçue par la source de lumière laser (5) en un signal électrique (U_{D}), qui est introduit dans le dispositif de comparaison (1), dans lequel le dispositif de comparaison (1) est conçu afin de comparer le signal électrique (U_{D}) avec une valeur prescrite et émettre en fonction des résultats de la comparaison un signal d'erreur (Uo), dans lequel le dispositif sensible à la lumière (3) présente au moins deux DELs, dans lequel une des DELs est conçue afin de mesurer la lumière laser et une autre des DELs est conçue afin de mesurer la lumière restante convertie par l'élément de conversion de lumière (6), dans lequel les au moins deux DELs sont branchées de manière anti parallèle l'une par rapport à l'autre.

2. Dispositif de surveillance selon la revendication 1, **caractérisé en ce que** le dispositif de comparaison (1) comprend un comparateur (10), qui est conçu afin de comparer le signal électrique (U_{D}) avec une valeur seuil (U_{ref}) et émettre le signal d'erreur (Uₒ) en cas de dépassement de la valeur seuil (U_{ref}).

3. Dispositif de surveillance selon une des revendications précédentes, **caractérisé en ce que** le signal d'erreur (Uo) est un signal électrique continu avec un niveau de tension différent de 0 V par rapport à la masse.

4. Dispositif de surveillance selon la revendication 1 ou 2, **caractérisé en ce que** le signal d'erreur (Uₒ) est un signal électrique continu avec un niveau de tension égal à 0 V par rapport à la masse.

5. Dispositif de surveillance selon une des revendications précédentes, **caractérisé en ce que** le dispositif sensible à la lumière (3) présente au moins une DEL bleue.

6. Dispositif de surveillance selon une des revendications précédentes, **caractérisé en ce que** la sensibilité spectrale de la DEL pour mesurer la lumière laser dans la plage de longueur d'onde de la lumière laser est maximale et la DEL pour mesurer la lumière restante, convertie par l'élément de conversion de lumière (6) présente une sensibilité spectrale dont le maximum se situe dans la plage de longueur d'onde de la lumière visible en étant diminuée de la plage de longueur d'onde de la lumière laser.

7. Dispositif de surveillance selon la revendication 6, **caractérisé en ce que** la DEL pour mesurer la lumière laser est une DEL bleue et la DEL pour mesurer la lumière restante, convertie par l'élément de conversion de lumière (6) est une DEL rouge.

8. Dispositif de surveillance selon une des revendications précédentes, **caractérisé en ce que** les signaux d'émission des DELs émis à la suite des mesures sont introduits dans le dispositif de comparaison (1) et comparés les uns avec les autres par ce dernier et le signal d'erreur (Uₒ) est déterminé en prenant en compte les signaux d'émission.

9. Phare laser de véhicule, présentant au moins une source de lumière laser (5) et un élément de conversion de lumière (6) pouvant être excité pour irradier de la lumière visible, comportant au moins un dispositif de surveillance selon une des revendications précédentes.

10. Phare laser de véhicule (4) selon la revendication 9, **caractérisé en ce que** au moins une DEL du dispositif sensible à la lumière (3) est une DEL adaptée au spectre de la source de lumière laser (5).

11. Phare laser de véhicule (4) selon la revendication 9 ou 10, **caractérisé en ce que** le phare laser de véhicule (4) présente une unité de commande reliée avec le dispositif de comparaison (1) pour commander la source de lumière laser (5), dans lequel l'unité de commande est conçue afin de désactiver la source de lumière laser (5) en présence du signal d'erreur (Uₒ).

12. Véhicule, notamment véhicule automobile, comportant au moins un, de préférence deux phares laser de véhicule (4) selon la revendication 10 ou 11.

13. Véhicule selon la revendication 12, **caractérisé en ce que** le véhicule présente une unité de commande reliée au dispositif de comparaison (1) pour commander la source de lumière laser (5), dans lequel l'unité de commande est conçue afin de désactiver la source de lumière laser (5) en présence du signal d'erreur (Uₒ).
